# EUROPÄISCHE PATENTANMELDUNG

(11) **EP 2 113 314 A2**
(43) Veröffentlichungstag der Anmeldung: **04.11.2009**
(21) Anmeldenummer: 09005710.0
(22) Anmeldetag: 23.04.2009
(51) Int. Cl.: B09B 3/00, B01D 17/025

(54) **Vorrichtung zum Abziehen von Kraftstoff aus zu entsorgenden Kraftfahrzeugen**

(30) Priorität: 28.04.2008 DE 202008005854 U
(71) Anmelder: Dagn, Josef, A-6345 Kössen (AT)
(72) Erfinder: Dagn, Josef, 6345 Kössen (AT); Dagn, Rainer, 6345 Kössen (AT)
(74) Vertreter: Klingseisen, Franz

(57) **Zusammenfassung**

Die Erfindung betrifft eine Vorrichtung zum Abziehen von Kraftstoff aus zu entsorgenden Kraftfahrzeugen, mit einem Tankanbohrgerät (16), einer Pumpe (13) sowie zwei Umschaltventilen (14 und 15), einem Lagertank (12) und einer Zapfpistole (17), bei der die Umschaltventile (14, 15) zwischen Tankanbohrgerät (16) und Pumpe (13) so schaltbar sind, dass die Pumpe (13) Kraftstoff vom Tankanbohrgerät (16) zum Lagertank (12) oder aus diesem zur Zapfpistole (17) fördert, wobei die Vorrichtung mit einem Druckluftanschluss (18) versehen ist und das Tankanbohrgerät (16) und die Pumpe (13) sowie die Umschaltventile (14, 15) durch Druckluft betreibbar bzw. umschaltbar sind.

## Beschreibung

Die Erfindung betrifft eine Vorrichtung zum Abziehen von Kraftstoff aus zu entsorgenden Kraftfahrzeugen und insbesondere eine Vorrichtung zum Trennen von Wasser und Kraftstoff.

Bei der Entsorgung von Kraftfahrzeugen ist es erforderlich, die im Fahrzeug noch enthaltenen Flüssigkeiten, wie Kraftstoff und Öl, vor der Verschrottung zu entfernen. Häufig ist der Kraftstoff im Kraftstofftank durch Wasser verunreinigt, sodass der aus dem Kraftstofftank abgesaugte oder abgepumpte Kraftstoff ohne Abscheidung des Wassers nicht verwendet werden kann.

Der Erfindung liegt die Aufgabe zugrunde, eine einfach aufgebaute Vorrichtung zum Abziehen von Kraftstoff aus zu entsorgenden Kraftfahrzeugen bereitzustellen. Insbesondere soll die Vorrichtung mobil einsetzbar sein, sodass sie leicht zum jeweiligen Verwendungsort verbracht werden kann.

Durch die Merkmale des Anspruchs 1 wird eine Vorrichtung bereitgestellt, die mit einer einzelnen Pumpe die Funktionen des Abziehens des Kraftstoffs aus einem Kraftfahrzeugtank in einen Lagertank und die Abgabe des Kraftstoffs aus dem Lagertank an eine Zapfpistole ausführen kann, wobei die Vorrichtung nur einen Druckluftanschluss benötigt.

Durch die Merkmale des Anspruchs 9 wird eine einfache Vorrichtung zum Abscheiden von Wasser aus dem Kraftstoff vorgeschlagen, die am jeweiligen Ort der Kraftfahrzeugentsorgung einsetzbar ist.

Beispielsweise Ausführungsformen der Erfindung wird nachfolgend anhand der Zeichnung näher erläutert. Es zeigen
- Fig. 1: ein Funktionsschema der Vorrichtung,
- Fig. 2: in einer perspektivischen Ansicht den Abscheidebehälter teilweise im Schnitt,
- Fig. 3: einen Längsschnitt durch den Abscheidebehälter,
- Fig. 4: einen Stapel von Lochblechscheiben als Strömungswiderstand,
- Fig: 5: schematisch eine Vorrichtung zum Abziehen von Kraftstoff aus einem Kraftstoff- tank, und
- Fig. 6: eine durch eine Reinigungsfunktion erweiterte Vorrichtung.

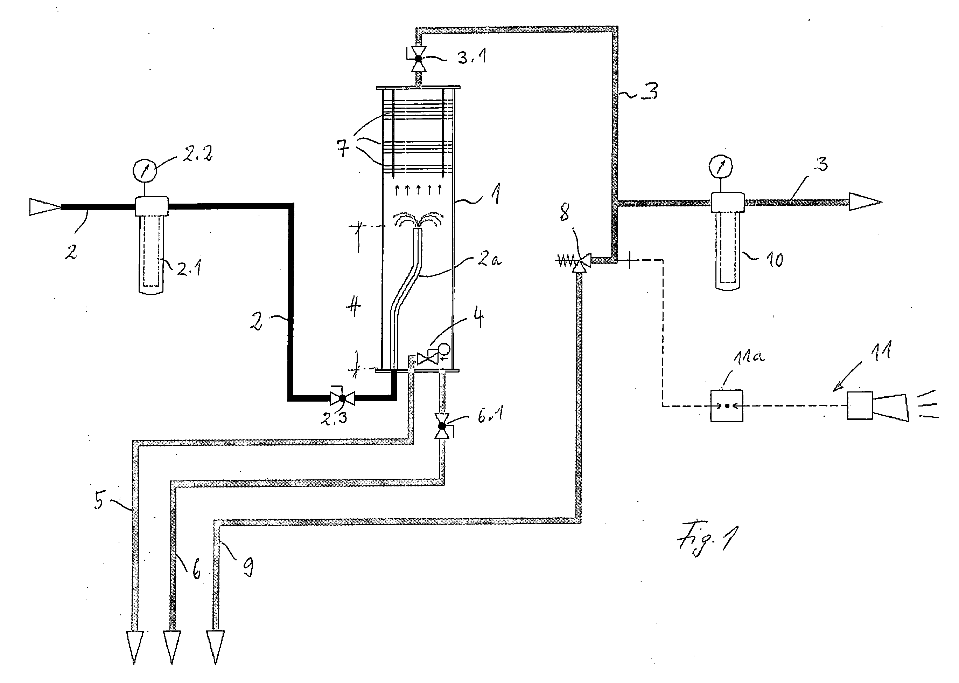

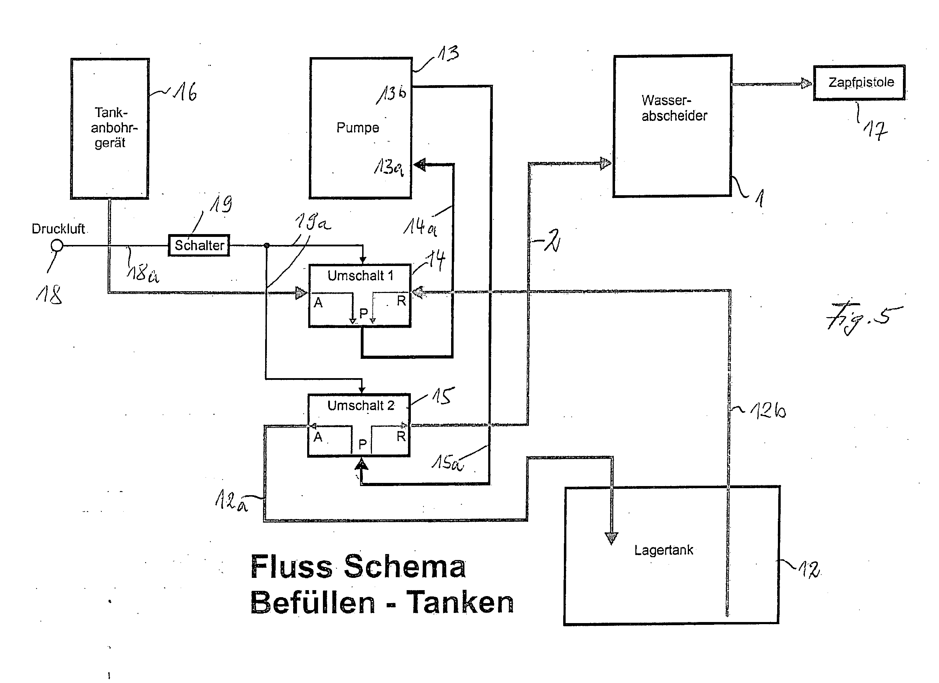

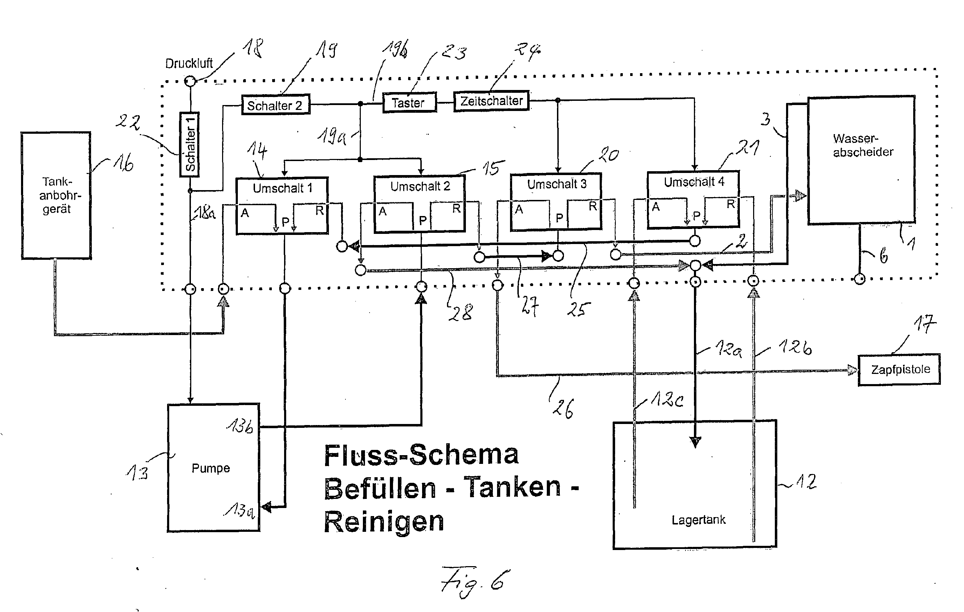

In Fig. 1 ist mit 1 ein zylindrischer bzw. säulenförmiger Abscheidebehälter bezeichnet, in den über eine Zuleitung 2 durch Wasser verunreinigtes Benzin zugeführt wird, das beispielsweise durch eine in Fig. 1 nicht dargestellte Pumpe aus einem Benzintank eines zu verschrottenden Fahrzeugs abgesaugt wird. Die Zuleitung 2 führt durch den Boden des Abscheidebehälters 1 und mit einem Abschnitt 2a bis in eine vorgegebene Höhe H über dem Boden. In der Zuleitung kann ein Schmutzfilter 2.1 mit einem Manometer 2.2 und ein Absperrventil 2.3 angeordnet sein. Am oberen Ende des Abscheidebehälters 1 mündet eine Ableitung 3, durch die gereinigtes Benzin zu einem in der Fig. 5 und 6 wiedergegebenen Lagertank 12 abgeführt wird. In der Ableitung 3 wird zweckmäßigerweise beim Austritt aus dem Abscheidebehälter 1 ein Absperrventil 3.1 vorgesehen.

Am Boden des Abscheidebehälters 1 ist ein Schwimmerventil 4 angeordnet, das mit einer Ablaufleitung 5 verbunden ist, durch die aus dem Benzin abgeschiedenes Wasser zu einem nicht dargestellten Schmutztank abgeführt wird. Mit 6 ist eine weitere Ablaufleitung bezeichnet, die mit dem Boden des Abscheidebehälters 1 verbunden ist. Durch manuelle Betätigung eineses Absperrhahnes 6.1 kann Wasser, das sich am Boden des Abscheidebehälters 1 gesammelt hat, zum Schmutztank abgeleitet werden.

Im oberen Teil des Abscheidebehälters 1 ist vor der Mündung der Ableitung 3 ein Stapel von Lochblechscheiben 7 angeordnet, die einen Strömungswiderstand bilden, sodass das aus der Mündung der Zuleitung 2 austretende Gemisch in seiner Strömungsgeschwindigkeit verlangsamt und beruhigt wird, sodass sich in dem Gemisch enthaltenes Wasser durch Schwerkraft am Boden des Abscheidebehälters 1 absetzen kann. Sobald das aus dem Gemisch abgeschiedene Wasser einen gewissen Füllstand im Abscheidebehälter 1 erreicht, öffnet das Schwimmventil 4, sodass das abgeschiedene Wasser durch die Ablaufleitung 5 in den Schmutztank abgeführt wird.

In der Ableitung 3 kann ein Wasserstoppfilter 10 angeordnet werden, der im Falle des Auftretens von Wasser in der Ableitung 3 diese absperrt, damit kein Wasser in den Lagertank für gereinigtes Benzin gelangen kann.

Weiterhin wird zweckmäßigerweise in der Ableitung 3 ein Überdruckventil 8 vorgesehen, durch das bei Überdruck in der Ableitung 3 eine Verbindung zum Schmutztank über eine Leitung 9 hergestellt wird. Dieses Überdruckventil 8 kann mit einer Alarmeinrichtung 11 verbunden sein, die einen Druckschalter 11 a aufweist, der bei Auftreten von Überdruck beispielsweise ein akustisches Signal abgibt.

Wie Fig. 1 zeigt, mündet die Zuleitung 2 vorzugsweise außermittig am Boden des Abscheidebehälters 1, damit bei einem geringen Durchmesser des säulenförmigen Abscheidebehälters 1 für die Positionierung des Schwimmerventils 4 ausreichend Platz verbleibt. Der gekröpfte Abschnitt 2a der Zuleitung 2 mündet etwa auf halber Höhe des Abscheidebehälters 1.

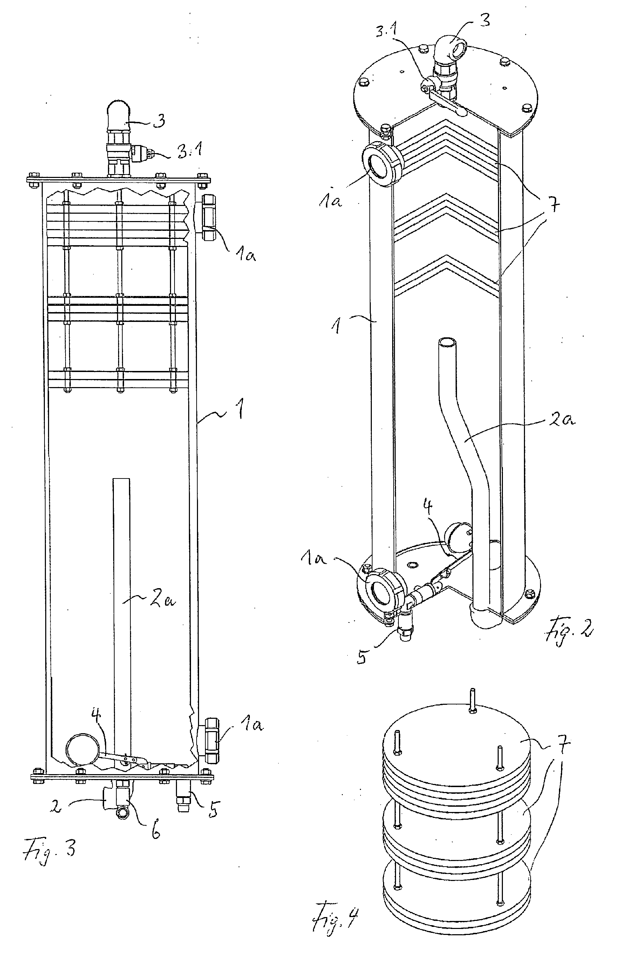

Fig. 2 und 3 zeigen Sichtfenster 1a am oberen und unteren Ende des Abscheidebehälters 1, sodass der Abscheidezustand im Behälter optisch überprüft werden kann.

Der in Fig. 4 wiedergegebene Stapel von Lochblechscheiben 7 ist so aufgebaut, dass drei Gruppen von Scheiben 7 in einem Abstand voneinander angeordnet sind, wobei sich die Anzahl der Scheiben von der unteren zur oberen Gruppe hin vergrößert, z. B. in Gruppen von drei, vier und sechs Lochscheiben. Anstelle von Lochblechscheiben 7 kann auch ein anderer Strömungswiderstand in dem Behälter 1 angeordnet sein, um die aufsteigende Strömung des Gemisches zu beruhigen und zu verlangsamen, z. B. Prallsiebscheiben.

Die Abscheidevorrichtung wird beispielsweise mit einem Druck von 4 bar betrieben, wobei ein Durchsatz von 20 l/Min. vorgesehen werden kann.

Der Abscheidebehälter 1 kann einen Durchmesser von beispielsweise 30 cm und eine Höhe von etwa 120 cm haben. Für den Transport zum jeweiligen Einsatzort kann der Abscheidebehälter 1 auf einem mit Rädern versehenen Rahmen angebracht werden.

Beim Betrieb der Vorrichtung wird das Gemisch zunächst durch den Partikelfilter 2.2 gepumpt, dessen Manometer mit einer Grün/Rot-Skala ausgestattet ist. Wenn der Zeiger in den roten Bereich gelangt, wird angezeigt, dass der Filtereinsatz zu wechseln ist. Hierzu kann auch eine akustische Warnung mittels eines Druckschaltventils vorgesehen werden, wie dies auch bei 11 in Fig. 1 wiedergegeben ist.

Das Gemisch strömt durch die Zuleitung 2 in den Abscheidebehälter 1, wobei die Strömung durch die Lochblechscheiben 7 beruhigt und verlangsamt wird, sodass sich das im Gemisch enthaltene Wasser auf die Lochblechscheiben 7 trifft und sich seitlich am Innenumfang des Abscheidebehälters 1 zum Boden hin absetzt. Vom Wasser getrenntes Benzin strömt durch den im Behälter 1 aufgebauten Druck durch die Ableitung 3.

Der Wasserstoppfilter 10 sperrt die Ableitung 3 ab, sobald der Wasserstand im Filter 10 eine gewisse Höhe erreicht. Durch den sich ergebenden Druckaufbau wird das Überdruckventil 8 aktiviert und die Flüssigkeit über die Leitung 9 in den Schmutztank abgeführt.

Der Wasserstoppfilter 10 ist ebenfalls mit einem Manometer versehen, das in der gleichen Weise ausgebildet sein kann wie das Manometer am Partikelfilter 2.2.

Die Vorrichtung ist nicht nur zum Trennen von Benzin und Wasser geeignet. Sie kann auch zum Trennen von anderen Flüssigkeiten unterschiedlichen spezifischen Gewichts eingesetzt werden.

Die anhand der Fig. 1 bis 4 beschriebene Abscheidevorrichtung wird vorzugsweise zusammen mit einer Pumpe und Umschaltventilen auf einem verfahrbaren Gestell montiert, an dem auch ein Tankanbohrgerät vorgesehen sein kann, mittels dem der Tank eines zu entsorgenden Kraftfahrzeugs zum Abziehen des Kraftstoffs angebohrt und eine Verbindung mit einer Pumpe hergestellt wird.

Fig. 5 zeigt schematisch den Aufbau einer solchen Vorrichtung mit dem Abscheidebehälter 1, einer Pumpe 13, zwei Umschaltventilen 14 und 15 und einem Tankanbohrgerät 16, wobei an den Abscheidebehälter 1 eine Zapfpistole 17 angeschlossen ist, mittels der ein bereitstehendes Fahrzeug unmittelbar mit dem Kraftstoff betankt werden kann, der aus dem Lagertank 12 abgezogen wird.

Die Vorrichtung in Fig. 5 weist einen Druckluftanschluss 18 und einen Druckluftschalter 19 in einer Druckluftleitung 18a auf, die sich stromabwärts von dem Schalter 19 bei 19a zu den beiden Umschaltventilen 14 und 15 verzweigt. Das Umschaltventil 14 ist mit dem Eingang 13a der Pumpe 13 und das Umschaltventil 15 mit dem Ausgang 13b der Pumpe 13 jeweils an der Anschlussstelle P über eine Leitung 14a bzw. 15a verbunden.

Das Umschaltventil 14 ist an der Anschlussstelle A mit dem Tankanbohrgerät 16 und an der Anschlussstelle R mit dem Lagertank 12 verbunden.

Das Umschaltventil 15 ist an der Anschlussstelle A mit dem Lagertank 12 und an der Anschlussstelle R mit dem Abscheidebehälter 1 verbunden.

Mit der Vorrichtung nach Fig. 5 kann Kraftstoff aus dem zu entsorgenden Kraftfahrzeug über das Tankanbohrgerät 16 in den Lagertank 12 oder zu der Zapfpistole 17 durch die Pumpe 13 gefördert werden. Zum Befüllen des Lagertanks 12 wird das Umschaltventil 14 so geschaltet, dass die Anschlüsse A und P verbunden werden, sodass der vom Tankanbohrgerät 16 abgezo-gene Kraftstoff über die Leitung 14a zur Pumpe 13 und von dieser über die Leitung 15a zum Umschaltventil 15 gefördert wird, das ebenfalls so geschaltet wird, dass die Anschlüsse A und P miteinander in Verbindung stehen, sodass der Kraftstoff über die Leitung 12a in den Lagertank 12 gefördert wird.

Wenn Kraftstoff zur Zapfpistole 17 gefördert werden soll (Funktion Tanken), werden die beiden Ventile 14 und 15 so umgeschaltet, dass die Anschlüsse R und P miteinander in Verbindung stehen, sodass durch die Pumpe 13 Kraftstoff aus dem Lagertank 12 über die Entnahmeleitung 12b über das Umschaltventil 14 abgepumpt und über das Umschaltventil 15 und den Abscheidebehälter 1 zur Zapfpistole 17 gefördert wird. Die in Fig. 5 mit 2 bezeichnete Leitung zwischen Umschaltventil 15 und Abscheidebehälter 1 entspricht der Zuleitung 2 in Fig. 1.

Das Tankanbohrgerät 16 und die Pumpe 13 werden durch Druckluft betrieben, wobei die entsprechenden Druckluftleitungen zwischen Druckluftanschluss 18 und diesen Geräten 13 und 16 nicht wiedergegeben sind. Auch die Umschaltventile 14 und 15 werden durch Druckluft über den Druckluftschalter 19 umgeschaltet.

Zum Umschalten der Flussrichtungen werden die zwei druckluftbetriebenen 3-Wege-Ventile 14 und 15 durch den 2-Wege-Druckluftschalter 19 gleichzeitig umgeschaltet.

Beim Befüllen werden die Ventile 14 und 15 nicht angesteuert, sodass der Strömungsweg vom Tankanbohrgerät 16 zum Pumpeneingang 13a und vom Pumpenausgang 13b zum Lagertank 12 frei ist. Bei der Kraftstoffabgabe an der Zapfpistole 17 werden die beiden Ventile 14 und 15 durch Druckluft angesteuert, sodass die Wege von P nach R offen sind und der Strömungsweg von der Entnahmeleitung 12b vom Lagertank 12 zum Pumpeneingang 13a sowie vom Pumpenausgang 13b zur Zapfpistole 17 über den Abscheidebehälter frei ist.

Fig. 6 zeigt eine Vorrichtung mit vier Umschaltventilen 14, 15, 20 und 21, die jeweils in der Grundstellung eine Verbindung zwischen den Anschlüssen A und P herstellen und in der Umschaltstellung eine Verbindung zwischen den Anschlüssen P und R. Mit dieser Vorrichtung ist es möglich, neben den zuvor geschilderten Funktionen "Befüllen des Lagertanks" und "Tanken" über die Zapfpistole 17 auch die Funktion "Reinigen des Kraftstoffs" auszuführen.

Bei dieser Vorrichtung nach Fig. 6 ist in der vom Druckluftanschluss 18 zur Pumpe 13 führenden Leitung 18a ein Schalter 22 vorgesehen, über den die Pumpe 13 und der Schalter 19 mit Druckluft versorgt werden. Der Schalter 19 steuert gleichzeitig die Umschaltventile 14 und 15 wie bei der Vorrichtung nach Fig. 5. Ein Taster 23 in der Leitung 19a stromab von der Anschlussstelle der Umschaltventile 14 und 15 aktiviert gleichzeitig die druckluftbetriebenen 3-Wege-Ventile 20 und 21, wobei dem Taster 23 ein Zeitschalter 24 in Form eines Drosselventils nachgeschaltet ist, das die Einschaltzeit dieser Ventile 20 und 21 einstellt, indem es den Druck langsam entweichen lässt.

Bei der Funktion "Befüllen" des Lagertanks 12 über eine Leitung 12a werden alle 3-Wege-Ventile 14, 15, 20 und 21 nicht angesteuert, sodass deren Wege von P nach A offen sind. Damit ist der Strömungsweg vom Tankanbohrgerät 16 zum Pumpeneingang 13a über das Ventil 14 und vom Pumpenausgang 13b zur Leitung 12a über das Ventil 15 frei, von dessen Anschluss A eine Leitung 28 zur Leitung 12a bzw. zum Lagertank 12 führt.

Bei der Funktion "Tanken" über die Zapfpistole 17 werden die beiden Umschaltventile 14 und 15 über den Schalter 19 und die Leitung 19a angesteuert, sodass deren Wege von P nach R offen sind, während an den Umschaltventilen 20 und 21 die Wege von P nach A offen sind. Damit ist der Strömungsweg von einer auf einem höheren Niveau im Lagertank 12 mündenden Entnahmeleitung 12c zum Pumpeneingang 13a über eine Leitung 25 zwischen Anschluss P des Umschaltventils 21 und Anschluss R des Ventils 14 frei, sowie vom Pumpenausgang 13b zur Zapfpistole 17, wobei der Pumpenausgang 13d am Anschluss P des Umschaltventils 15 liegt und von dessen Anschluss R eine Leitung 27 zum Anschluss P des Umschaltventils 20 führt, dessen Anschluss A über eine Leitung 26 mit der Zapfpistole 17 verbunden ist.

Bei der Funktion "Kraftstoff reinigen" werden die Ventile 14 und 15 so angesteuert, dass deren Wege von P nach R offen sind. Durch Betätigen des Drucklufttasters 23 werden die Umschaltventile 20 und 21 aktiviert, sodass deren Wege ebenfalls von P nach R frei sind. Bei dieser Schaltung ist der Strömungsweg von der nahe dem Boden des Lagertanks 12 mündenden Entnahmeleitung 12b zum Pumpeneingang 13a über das Umschaltventil 21, die Leitung 25 und das Umschaltventil 14 frei sowie der Strömungsweg vom Pumpenausgang 13b zum Eingang 2 des Abscheidebehälters 1 über das Umschaltventil 15, die Leitung 27 zwischen Anschluss R des Ventils 15 und Anschluss P des Ventils 20, vor dessen Anschluss R mit der Zuleitung 2 zum Abscheidebehälter 1 verbunden ist. Vom Ausgang 3 des Abscheidebehälters 1 fließt der gereinigte Kraftstoff zur Leitung 12a in den Lagertank 12. Der Reinigungsvorgang kann durch den Druckluftschalter 19 unterbrochen werden.

Bei beiden Vorrichtungen nach den Fig. 5 und 6 können alle Funktionen durch die Pumpe 13 ausgeführt werden.

Die Entnahmeleitung 12c, mittels der Kraftstoff aus dem Lagertank 12 zur Zapfpistole 17 gefördert wird, mündet aus Sicherheitsgründen in einem Abstand über dem Boden des Lagertanks 12, falls sich in dessen Bodenbereich Wasser angesammelt haben sollte. Entsprechend wird beim Reinigungsvorgang Kraftstoff durch die Entnahmeleitung 12b vom Boden des Lagertanks 12 abgezogen.

In Fig. 6 ist durch eine punktierte Linie ein Schaltungsblock angedeutet, der am Abscheidebehälter 1 montiert sein kann und an den das Tankanbohrgerät 16, die Pumpe 13, der Lagertank 12 und die Zapfpistole 17 anschließbar sind.

## Patentansprüche

1. Vorrichtung zum Abziehen von Kraftstoff aus zu entsorgenden Kraftfahrzeugen, umfassend
ein Tankanbohrgerät (16), eine Pumpe (13) sowie zwei Umschaltventile (14 und 15), einen Lagertank (12) und eine Zapfpistole (17),
wobei die Umschaltventile (14, 15) zwischen Tankanbohrgerät (16) und Pumpe (13) so schaltbar sind, dass die Pumpe (13) Kraftstoff vom Tankanbohrgerät (16) zum Lagertank (12) oder aus diesem zur Zapfpistole (17) fördert, und
wobei die Vorrichtung mit einem Druckluftanschluss (18) versehen ist und das Tankanbohrgerät (16) und die Pumpe (13) sowie die Umschaltventile (14, 15) durch Druckluft betreibbar bzw. umschaltbar sind.

2. Vorrichtung nach Anspruch 1, wobei weitere druckluftgesteuerte Umschaltventile (20, 21) vorgesehen sind, die in Verbindung mit den Ventilen (14, 15) so schaltbar sind, dass Kraftstoff aus dem Lagertank (12) zu einem Abscheidebehälter (1) und von diesem zurück zum Lagertank (12) durch die Pumpe (13) gefördert wird.

3. Vorrichtung nach Anspruch 2, wobei im Lagertank (12) eine Entnahmeleitung (12b) nahe dem Boden des Lagertanks mündet, die mit dem Abscheidebehälter (1) durch die Umschaltventile (14, 15, 20, 21) verbindbar ist, und eine Entnahmeleitung (12c), die in einem Abstand über dem Boden des Lagertanks (12) mündet und über die Umschaltventile (14, 15, 20, 21) mit der Zapfpistole (17) verbindbar ist.

4. Vorrichtung zum Trennen von Wasser und Kraftstoff, umfassend einen Abscheidebehälter (1) mit einer Zuleitung (2) für ein Gemisch aus Wasser und Kraftstoff, die sich vom Boden des Abscheidebehälters in einen Abstand über dem Boden in dem Abscheidebehälter erstreckt, und
mit einer Ableitung (3) für Kraftstoff an der Oberseite des Abscheidebehälters,
wobei vor der Mündung der Ableitung (3) eine den Strömungswiderstand erhöhende Einrichtung (7), und
am Boden des Abscheidebehälters (1) eine Ablaufleitung (5) für Wasser vorgesehen ist.

5. Vorrichtung nach Anspruch 4, wobei an der Ablaufleitung (5) ein Schwimmerventil (4) vorgesehen ist, das bei einem vorgegebenen Füllstand an Wasser die Ablaufleitung (5) freigibt.

6. Vorrichtung nach Anspruch 4 oder 5, wobei die Zuleitung (2) exzentrisch durch den Boden des Abscheidebehälters (1) geführt ist und einen gekröpften Endabschnitt aufweist, der im Abscheidebehälter etwa auf halber Höhe endet.

7. Vorrichtung nach einem der Ansprüche 4 bis 6, wobei am Boden des Abscheidebehälters (1) eine Ablaufleitung (6) mit einem Absperrventil (6.1) angeschlossen ist, durch die durch manuelle Betätigung Flüssigkeit aus dem Behälter abgeleitet werden kann.

8. Vorrichtung nach einem der vorhergehenden Ansprüche 4 bis 7, wobei in der Ableitung (3) ein Wasserstoppfilter (11) angeordnet ist, der bei einem vorgegebenen Füllstand an Wasser die Ableitung selbsttätig absperrt, und vor dem Wasserstoppfilter (10) ein Überdruckventil (8) in der Ableitung (3) angeordnet ist, das bei Überdruck in der Ableitung (3) diese mit einem Sammeltank verbindet.

9. Vorrichtung nach Anspruch 8, wobei mit dem Überdruckventil (8) ein Druckschalter (11a) einer Alarmeinrichtung (11) verbunden ist.

10. Vorrichtung nach einem der vorhergehenden Ansprüche 4 bis 9, wobei die den Strömungswiderstand erhöhende Einrichtung in der Form von gelochten Scheiben oder Sieben (7) ausgebildet ist, die in einem Stapel vor der Mündung der Ableitung (3) im Abscheidebehälter 1 angeordnet sind.

11. Vorrichtung nach Anspruch 10, wobei die Lochblechscheiben (7) in voneinander beabstandeten Gruppen angeordnet sind.
